# FASCICULE DE BREVET EUROPEEN

(11) **EP 4 278 103 B1**
(45) Date de publication et mention de la délivrance du brevet: **25.12.2024**
(21) Numéro de dépôt: 22702503.8
(22) Date de dépôt: 06.01.2022
(51) Int. Cl.: F16B 39/10

(54) **DISPOSITIF DE LIAISON DE PIÈCES MÉCANIQUES AVEC JEU AXIAL**
VORRICHTUNG ZUM AXIALSPIELVERBINDEN VON MECHANISCHEN TEILEN
DEVICE FOR CONNECTING MECHANICAL PARTS WITH AXIAL PLAY

(30) Priorité: 13.01.2021 FR 2100292
(43) Date de publication de la demande: 22.11.2023
(73) Titulaire: Safran Landing Systems, 78140 Vélizy-Villacoublay (FR)
(72) Inventeur: CHAUVET, Dominique, 77550 Moissy-Cramayel (FR); FERREIRA DA SILVA, Luis, 77550 Moissy-Cramayel (FR); MOSNIER, Philippe, 77550 Moissy-Cramayel (FR); RIOUX, Christophe, 77550 Moissy-Cramayel (FR)
(74) Mandataire: Gevers & Orès
(86) Numéro de dépôt international: PCT/FR2022/050034
(87) Numéro de publication internationale: WO 2022/152997

(56) Documents cités:
- FR-A- 539 919
- FR-A1- 2 952 146
- US-A1- 2006 029 485
- US-E- R E15 379

## Description

### Domaine technique de l'invention

La présente invention concerne un dispositif de liaison destiné à lier deux pièces mécaniques distinctes ensemble avec un jeu axial. La présente invention concerne, également, un ensemble mécanique pour un aéronef, en particulier un avion de transport ou un hélicoptère, lié par un tel dispositif de liaison. La présente invention concerne, en outre, un procédé d'assemblage d'un tel ensemble mécanique.

### Arrière-plan technique

L'arrière-plan technique comprend notamment les documents FR-A1-539 919, US-A1-2006/0029485, US R E15,379 et FR-A1-2 952 146.

Un tel dispositif de liaison peut être utilisé dans tout domaine, notamment aéronautique mais non exclusivement, nécessitant une opération d'assemblage structural entre deux pièces mécaniques présentant un certain jeu axial.

Il peut s'agir d'un compas formé par les deux pièces mécaniques. Le compas est lié par une extrémité à une tige coulissante fixé aux roues d'un aéronef et par une extrémité opposée au caisson de l'atterrisseur. L'aéronef peut être un avion de transport ou un hélicoptère.

De façon classique, les deux pièces mécaniques sont liées ensemble par l'intermédiaire d'une tige qui les traverse. Les mouvements de translation des pièces mécaniques le long de la tige sont bloqués d'un côté par une butée venant en appui contre l'une des pièces mécaniques et du côté opposé par un écrou vissé sur la tige jusqu'à venir en appui contre l'autre pièce mécanique. À ce stade de l'assemblage, il est nécessaire de générer un jeu le long de l'axe de la tige pour permettre aux pièces mécaniques de s'articuler l'une par rapport à l'autre.

De manière connue, un opérateur peut dévisser l'écrou d'un certain angle pour, en fonction du pas de vis du filetage de la tige, le déplacer d'une distance correspondant au jeu axial souhaité entre les pièces mécaniques. L'écrou est ensuite immobilisé sur la tige, par exemple par l'intermédiaire d'une goupille, afin de maintenir le jeu axial constant.

Or, ce jeu axial nécessaire à l'articulation des pièces mécaniques n'excède en général pas 0,1 millimètre. Le dévissage et le blocage de l'écrou sur la tige sont donc des opérations minutieuses et complexes qui peuvent conduire à un mauvais fonctionnement du compas si elles sont mal exécutées.

Dans certains dispositifs de liaison, tels que celui décrit dans la demande FR-A1-2 952 146, l'écrou vissé sur la partie filetée de la tige intègre, dans son ergonomie, des lumières ménagées dans des jupes. Les dimensions de ces lumières représentent l'angle de dévissage possible de l'écrou et donc le jeu axial souhaité. Une rondelle pourvue d'ergots est alors montée contre l'écrou sur des cannelures de la tige. Les ergots sont engagés dans les jupes et la position angulaire des ergots dans la lumière de chaque jupe est réglée puis fixée par des vis qui bloquent en rotation l'ensemble de ces éléments.

Par ailleurs, il existe d'autres dispositifs de liaison dans lesquels le blocage en rotation de l'écrou sur la tige est réalisé par l'intermédiaire de plusieurs rondelles frein déformables. Ces rondelles frein sont engagées sur des cannelures présentes conjointement au filetage de sorte à être rendues solidaire en rotation de la tige. Le blocage de l'écrou sur la tige et donc du jeu axial entre les pièces mécaniques repose alors sur la conformation d'une denture interne des rondelles frein avec les cannelures de la tige.

Or, les dimensions réduites de l'ensemble de ces éléments rendent le blocage de l'écrou fragile face aux effets de la corrosion. L'usure liée à l'utilisation du dispositif de liaison ou à des montages/démontages successifs tend à faire disparaître les cannelures de la tige ce qui peut conduire à une modification du jeu axial entre les pièces mécaniques par dévissage de l'écrou voire à la perte de l'écrou et donc du dispositif de liaison.

### Objectifs de l'invention

La présente invention a pour but de pallier cet inconvénient en proposant un dispositif de liaison dans lequel un système d'anti-rotation permettant le blocage en rotation de l'écrou sur la tige est résistant à la corrosion.

### Exposé de l'invention

À cet effet, l'invention concerne un dispositif de liaison destiné à lier ensemble deux pièces mécaniques distinctes, ledit dispositif comportant :
- une tige présentant un axe longitudinal et comprenant un tronçon destiné à être inséré au moins en partie dans des chapes alignées desdites pièces mécaniques, ledit tronçon s'étendant entre une butée axiale et une partie filetée de la tige,
- un écrou configuré pour être vissé sur ladite partie filetée de ladite tige de sorte à maintenir lesdites deux pièces mécaniques entre ladite butée axiale et ledit écrou, et
- un système d'anti-rotation configuré pour bloquer en rotation ledit écrou, ledit système d'anti-rotation comportant :
   + une rondelle montée autour de ladite tige et configurée pour coopérer par complémentarité de formes avec ladite tige de sorte à ce que ladite rondelle soit solidaire en rotation de ladite tige,
      ladite rondelle comprenant au moins une protubérance s'étendant vers l'intérieur par rapport audit axe longitudinal, la ou chaque protubérance étant engagée dans une encoche de forme complémentaire de ladite tige, et
   + une bague montée autour de l'écrou, ladite bague comportant une périphérie interne de forme complémentaire de celle d'une périphérie externe dudit écrou de sorte que ladite bague soit solidaire en rotation dudit écrou,

caractérisé en ce que ledit système d'anti-rotation comporte également une vis qui est configuré pour assurer la solidarisation axiale en rotation de ladite bague et de ladite rondelle,
et en ce que ladite bague comporte également :
   - une fente axiale de sorte à minimiser le jeu de montage sur ledit écrou, deux extrémités circonférentielles qui sont situées de part et d'autre de ladite fente axiale, chacune desdites extrémités circonférentielles se prolongeant en une patte de fixation comportant un orifice central de passage de ladite vis, ladite rondelle comportant une excroissance configurée pour être intercalée entre lesdites pattes, ladite excroissance comportant un orifice de passage de ladite vis.

Ainsi, grâce à l'invention, le blocage du système d'anti-rotation de l'écrou sur la tige est réalisé par un nombre limité de protubérances sur une rondelle et d'encoches sur la tige. Par ailleurs, la présence d'éléments en creux sur la tige tels que les encoches d'une dimension importante au regard de la dimension de la tige permet d'augmenter la robustesse du dispositif de liaison à la corrosion et à l'usure.

Le dispositif de liaison selon l'invention peut également présenter une ou plusieurs des caractéristiques suivantes, prises seules ou en combinaison les unes avec les autres :
- ladite rondelle comprend un nombre de protubérances compris entre deux et quatre, lesdites protubérances étant agencées de manière régulière autour dudit axe longitudinal,
- ladite périphérie interne de la bague comporte une denture et ladite périphérie externe de l'écrou est du type à six pans,
- ladite vis s'étend dans un plan sensiblement perpendiculaire audit axe longitudinal, et
- ladite vis est vissée dans un écrou de serrage qui comprend au moins un évidement transversal destiné à être aligné avec un orifice transversal de ladite vis pour le passage d'un élément d'immobilisation tel qu'une goupille ou un fil frein.

La présente invention a également pour objet un ensemble mécanique pour aéronef, en particulier d'hélicoptère ou d'avion, comportant des pièces mécaniques liées ensemble par un dispositif de liaison tel que décrit ci-dessus. La présente invention concerne, en outre, un procédé d'assemblage de deux pièces mécaniques, à l'aide d'un dispositif de liaison tel que celui décrit ci-dessus.

Selon l'invention, le procédé d'assemblage comprend des étapes consistant successivement au moins :
- à insérer ladite tige dans lesdites chapes alignées desdites deux pièces mécaniques jusqu'à ce que ladite butée axiale soit en appui contre une desdites deux pièces mécaniques ;
- à monter ladite rondelle autour de ladite tige contre l'autre desdites deux pièces mécaniques ;
- à visser l'écrou sur la partie filetée de ladite tige jusqu'à une position de contact avec ladite rondelle ;
- à monter la bague autour de l'écrou ;
- à amener, par dévissage, ledit écrou de ladite position de contact jusqu'à une position d'arrêt ;
- à intercaler l'excroissance de la rondelle entre les pattes de la bague, et
- à bloquer en rotation ledit écrou dans ladite position d'arrêt par ladite vis, cette vis traversant des orifices des pattes et de l'excroissance et étant vissée dans un écrou de serrage.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 montre une vue schématique en perspective d'un dispositif de liaison selon un mode de réalisation particulier ;
[Fig.2] la figure 2 montre une vue schématique éclatée et en perspective d'un dispositif de liaison selon un mode de réalisation préféré ;
[Fig.3] la figure 3 illustre une vue schématique partielle en coupe d'une rondelle, selon un mode de réalisation préféré ;
[Fig.4] la figure 4 illustre une vue schématique en coupe d'un écrou, d'une bague et d'une vis, selon un mode de réalisation préféré ; et
[Fig.5] la figure 5 illustre schématiquement les étapes principales d'un procédé d'assemblage d'un tel ensemble mécanique.

### Description détaillée de l'invention

Dans la description qui suit, l'invention s'applique de manière générale à un dispositif 1 de liaison (ci-après « dispositif 1) destiné à lier, entre elles, deux pièces mécaniques P1 et P2 distinctes avec un jeu axial. Ces pièces mécaniques P1 et P2 peuvent être les deux branches d'un compas pour un atterrisseur d'aéronef qui lie une tige coulissante portant les roues à un caisson solidaire du corps de l'aéronef.

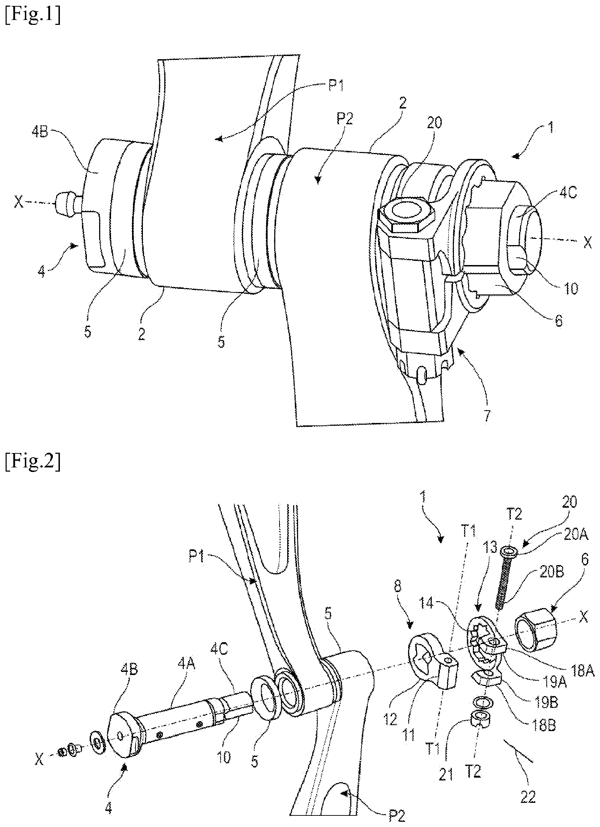

Les pièces mécaniques P1 et P2 sont pourvues, chacune, d'une chape 2, 3 de section circulaire, comme montré sur les figures 1 et 2. Pour l'assemblage, les deux pièces mécaniques P1 et P2 sont amenées l'une en contact de l'autre ou chacune au contact d'une rondelle d'appui 5, de manière à superposer les chapes 2 et 3 par l'intermédiaire desquelles le dispositif de liaison 1 lie ensemble les pièces mécaniques P1 et P2 en fixant un jeu axial. Ce jeu axial, qui peut être compris entre 0 et 0,1 millimètre, permet l'articulation d'une pièce mécanique P1 par rapport à l'autre pièce mécanique P2 autour d'un axe X-X dit longitudinal.

Par convention dans la présente demande, les termes « interne » et « externe » sont utilisés en référence à un positionnement par rapport à l'axe X-X d'articulation ou longitudinal. Ainsi, un cylindre s'étendant selon l'axe X-X comporte une face interne tournée vers l'axe X-X et une face externe, opposée à sa face interne. On entend par « longitudinal/axial » ou « longitudinalement/axialement » toute direction parallèle à l'axe X-X, et par « transversalement » ou « transversal » toute direction perpendiculaire à l'axe X-X.

Comme représenté sur les figures 1 et 2, le dispositif 1 comporte une tige 4 présentant une forme longitudinale agencée le long de l'axe X-X. La tige 4 est formée d'un tronçon 4A de section circulaire pour permettre l'articulation des pièces mécaniques P1 et P2 entre elles. Le tronçon 4 s'étend entre une butée axiale 4B et une partie filetée 4C. Dans un mode de réalisation préféré, le pas de vis de la partie filetée 4C est compris entre 0,6 millimètre et 1 millimètre. Au moins une partie du tronçon 4A s'insère dans les chapes 2 et 3 qui sont alignées le long de l'axe X-X de sorte que la butée axiale 4B est en appui contre une des pièces mécaniques P1 et que la partie filetée 4C s'étend au-delà de l'autre pièce mécanique P2. Une rondelle d'appui 5 peut être agencée entre la butée axiale 4B et la pièce mécanique P1 contre laquelle elle est en appui.

Le dispositif 1 comporte également un écrou 6 qui est vissé sur la partie filetée 4C de sorte à maintenir les pièces mécaniques P1 et P2 ensemble, entre la butée axiale 4B et l'écrou 6. Comme représenté sur les figures 1, 2 et 4, l'écrou 6 comporte une périphérie externe 6A sur laquelle sont agencées des arêtes 6B s'étendant longitudinalement. Selon un mode de réalisation préféré, l'écrou 6 est de type à six pans.

Le dispositif 1 comprend, de plus, un système d'anti-rotation 7 qui permet de bloquer tout mouvement de rotation de l'écrou 6 par rapport à la tige 4. Ce système d'anti-rotation 7 comporte notamment une rondelle 8 montée autour de la tige 4 et une bague 13 montée autour de l'écrou 6. La rondelle 8 et la bague 13 sont fixées ensemble par une vis 20.

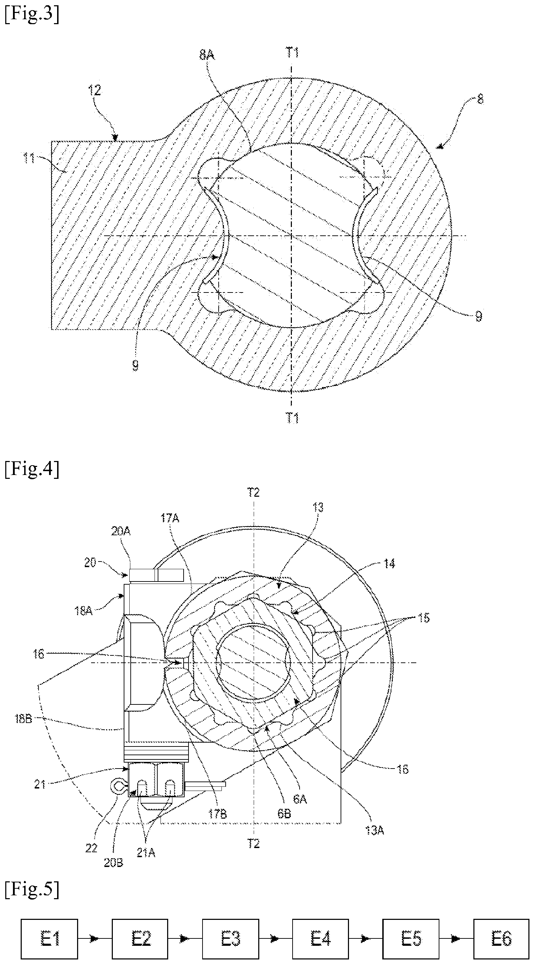

Selon un mode de réalisation préféré, la rondelle 8 coopère par complémentarité de formes avec la tige 4 pour en être solidaire en rotation autour de l'axe X-X. Comme représenté sur les figures 2 et 3, la rondelle 8 est pourvue de protubérances 9 s'étendant le long de l'axe X-X et vers l'intérieur par rapport à l'axe X-X. Les protubérances sont au nombre de deux, bien que la rondelle 8 puisse en comporter trois ou quatre (non représenté). Les protubérances 9 présentent une section arrondie. Elles sont agencées de manière régulière autour de l'axe X-X sur une face interne 8A de la rondelle 8. Ainsi, comme représenté sur la figure 3, deux protubérances 9 sont agencées de manière diamétralement opposée l'une de l'autre par rapport à l'axe X-X. Comme représenté sur la figure 2, la tige 4 comporte des encoches 10 dans lesquelles les protubérances 9 sont engagées. Chacune des encoches 10 s'étend longitudinalement sur la partie filetée 4C et présente une forme complémentaire à la forme d'une protubérance 9 de sorte qu'une fois chaque protubérance 9 engagée dans une encoche 10, la rondelle 8 est solidaire en rotation de la tige 4. Le nombre d'encoches 10 peut être égal ou supérieur au nombre de protubérances 9 portées par la rondelle 8.

Dans un mode de réalisation avantageux, la rondelle 8 comporte également une excroissance 11. Cette excroissance 11 s'étend vers l'extérieur de la rondelle 8 par rapport à l'axe X-X. L'excroissance 11 comprend un orifice 12 qui la traverse le long d'un axe transversal T1-T1 qui est perpendiculaire à l'axe X-X. L'orifice 12 permet le passage de la vis 20.

Selon un mode de réalisation préféré, la bague 13 du système d'anti-rotation 7 comporte une face interne 13A pourvue d'une denture 14. Comme représenté sur la figure 4, la denture 14 comprend douze dents 15 formant une empreinte bi-hexagonale. L'insertion de chaque arête 6B entre deux dents successives de la denture rend la bague 13 solidaire en rotation de l'écrou 6. En variante, la denture forme une empreinte hexagonale (non représenté). La bague 13 comporte, en outre, une fente 16 axiale de sorte à minimiser le jeu de montage autour de l'écrou 6, comme représenté sur les figures 1 et 4. La bague 13 comprend deux extrémités 17A et 17B circonférentielles qui sont situées de part et d'autre de la fente 16. Chacune de ces extrémités 17A, 17B se prolonge en une patte 18A, 18B de fixation s'étendant vers l'extérieur de la bague 13. Chaque patte 18A, 18B est pourvue d'un orifice central 19A, 19B. Les pattes 18A et 18B sont orientées de sorte que les orifices centraux 19A et 19B sont en regard l'un de l'autre pour permettre le passage de la vis 20 à travers les pattes 18A et 18B. Les orifices centraux 19A et 19B sont alignés le long d'un axe transversal T2-T2 perpendiculaire à l'axe X-X. Par ailleurs, comme représenté sur les figures 1 et 4, lorsque les axes transversaux T1-T1 et T2-T2 sont sensiblement identiques, l'excroissance 11 peut être intercalée entre les pattes 18A et 18B de sorte que l'orifice 12 est aligné avec les orifices centraux 19A et 19B.

Selon un mode de réalisation préféré, la vis 20 est engagée dans les orifices centraux 19A et 19B et dans l'orifice 12 de l'excroissance 11 pour rendre la bague 13 solidaire axialement et en rotation de la rondelle 8. La vis 20 s'étend le long de l'axe T2-T2 dans un plan perpendiculaire à l'axe X-X. Elle comprend une butée 20A en appui contre une des pattes 18A et un orifice transversal 20B. La vis 20 est vissée dans un écrou de serrage 21 venant en appui contre l'autre patte 18B. L'écrou de serrage 21 comporte un évidement transversal 21A qui est aligné avec l'orifice transversal 20B. À titre d'exemple, l'écrou de serrage 21 peut être un écrou à double créneaux, chaque espace entre deux créneaux successifs formant un évidement transversal 21A potentiel. Comme représenté sur les figures 1 et 4, un élément d'immobilisation 22 peut être inséré au travers de l'orifice transversal 20B et de l'évidement transversal 21A de sorte à empêcher tout desserrage de l'écrou de serrage 21 sur la vis 20. À titre d'exemple, l'élément d'immobilisation 22 peut être une goupille ou un fil frein.

Le dispositif 1, tel que décrit ci-dessus, est assemblé aux deux pièces mécaniques P1 et P2 pour former un ensemble mécanique pour un aéronef, en particulier un hélicoptère ou un avion de transport. Dans une application préférée de l'invention, l'ensemble mécanique est un compas liant la tige coulissante portant les roues à un caisson de train d'atterrissage.

Comme représenté sur la figure 5, le procédé d'assemblage d'un tel ensemble mécanique comprend, notamment, les étapes E1 à E6 réalisées successivement.

L'étape E1 consiste à insérer le tronçon 4A de la tige 4 dans les chapes 2 et 3 qui sont alignées le long de l'axe X-X. La butée 4B de la tige 4 vient alors en appui contre une des pièces mécaniques P1. Une rondelle d'appui 5 peut être intercalée entre la butée 4B et la pièce mécanique P1.

Au cours de l'étape E2, la rondelle 8 est montée autour de la tige 4 et amenée au contact de l'autre pièce mécanique P2. Une rondelle d'appui peut également être insérée entre la rondelle 8 et la pièce mécanique P2 (non représenté). Le montage de la rondelle 8 contre la pièce mécanique P2 (ou contre la rondelle d'appui) est réalisé en engageant chacune des protubérances 9 dans une des encoches 10 de la partie filetée 4C de sorte que la rondelle 8 et la tige 4 sont solidaires l'une de l'autre en rotation autour de l'axe X-X.

L'écrou 6 est vissé, lors de l'étape E3, sur la partie filetée 4C de la tige 4 jusqu'à être en appui contre la rondelle 8 dans une position dite de contact. Dans cette position de contact, l'écrou 6 interdit tout jeu axial entre les pièces mécaniques P1 et P2.

La bague 13 est alors montée autour de l'écrou 6 (étape E4). Les arêtes 6B s'engagent dans certains espaces entre deux dents 15 successives de la denture 14 de sorte que l'angle d'ajustement formé par l'axe T2-T2 d'alignement des orifices centraux 19A et 19B et l'axe T1-T1 le long duquel l'excroissance 11 est agencée soit le plus faible possible. La valeur de cet angle d'ajustement est comprise entre 0 degré lorsque les axes T1-T1 et T2-T2 sont parallèles et une valeur d'angle d'ajustement maximale égale à environ 30 degrés. Cette valeur d'angle d'ajustement maximale correspond à la valeur de l'angle entre deux dents 15 successives de la denture 14 à empreinte bi-hexagonale.

Lors de l'étape E5, l'écrou 6 est dévissé de la valeur de l'angle d'ajustement de sorte à amener l'écrou 6 de la position de contact à une position d'arrêt. La position d'arrêt représente la position de l'écrou 6 à laquelle l'excroissance 11 peut être intercalée entre les pattes 18A et 18B, comme représenté sur la figure 1. Compte tenu du pas de vis de la tige 4, le dévissage de l'écrou 6 de sa position de contact à sa position d'arrêt permet de générer un jeu axial entre les pièces mécaniques P1 et P2 dont la valeur est comprise en 0 millimètre et 0,1 millimètre.

L'étape E6 consiste ensuite à engager la vis 20 dans les orifices centraux 19A et 19B et l'orifice 12 de l'excroissance 11 pour fixer axialement et en rotation la bague 13 à la rondelle 8. La vis 20 est vissée dans un écrou de serrage 21 et l'ensemble est immobilisé par une goupille 22 ou un fil frein.

Le dispositif 1 de liaison selon l'invention présente notamment l'avantage de permettre d'installer un jeu axial fin compris entre 0 millimètre et 0,1 millimètre pour l'articulation des pièces mécaniques P1 et P2.

Par ailleurs, la présence d'une vis 20 et d'un écrou de serrage 21 rend le verrouillage plus robuste à l'usure et à la corrosion. En outre, une goupille 22 ou un fil frein permet un double freinage qui rend le verrouillage de l'écrou 6 plus sécurisé.

## Revendications

1. Dispositif de liaison destiné à lier ensemble deux pièces mécaniques (P1, P2) distinctes, ledit dispositif (1) comportant :
- une tige (4) présentant un axe (X-X) longitudinal et comprenant un tronçon (4A) destiné à être inséré au moins en partie dans des chapes (2, 3) alignées desdites pièces mécaniques (P1, P2), ledit tronçon (4A) s'étendant entre une butée (4B) axiale et une partie filetée (4C) de la tige,
- un écrou (6) configuré pour être vissé sur ladite partie filetée (4C) de ladite tige (4) de sorte à maintenir lesdites deux pièces mécaniques (P1, P2) entre ladite butée (4B) axiale et ledit écrou (6), et
- un système d'anti-rotation (7) configuré pour bloquer en rotation ledit écrou (6), ledit système d'anti-rotation (7) comportant :
+ une rondelle (8) montée autour de ladite tige (4) et configurée pour coopérer par complémentarité de formes avec ladite tige (4) de sorte à ce que ladite rondelle (8) soit solidaire en rotation de ladite tige (4), ladite rondelle (8) comprenant au moins une protubérance (9) s'étendant vers l'intérieur par rapport audit axe (X-X) longitudinal, la ou chaque protubérance (9) étant engagée dans une encoche (10) de forme complémentaire de ladite tige (4), et
+ une bague (13) montée autour de l'écrou (6), ladite bague (13) comportant une périphérie interne (13A) de forme complémentaire de celle d'une périphérie externe (6A) dudit écrou (6) de sorte que ladite bague (13) soit solidaire en rotation dudit écrou (6),
**caractérisé en ce que** ledit système d'anti-rotation (7) comporte également une vis (20) qui est configuré pour assurer la solidarisation axiale en rotation de ladite bague (13) et de ladite rondelle (8),
et **en ce que** ladite bague (13) comporte également :
- une fente (16) axiale de sorte à minimiser le jeu de montage sur ledit écrou (6),
- deux extrémités (17A, 17B) circonférentielles qui sont situées de part et d'autre de ladite fente (16) axiale, chacune desdites extrémités (17A, 17B) circonférentielles se prolongeant en une patte (18A, 18B) de fixation comportant un orifice central (19A, 19B) de passage de ladite vis (20), ladite rondelle (8) comportant une excroissance (11) configurée pour être intercalée entre lesdites pattes (18A, 18B), ladite excroissance (11) comportant un orifice (12) de passage de ladite vis (20).

2. Dispositif de liaison selon la revendication 1, **caractérisé en ce que** ladite rondelle (8) comprend un nombre de protubérances (9) compris entre deux et quatre, lesdites protubérances (9) étant agencées de manière régulière autour dudit axe (X-X) longitudinal.

3. Dispositif de liaison selon l'une quelconque des revendications précédentes, **caractérisé en ce que** ladite périphérie interne (13A) de la bague (13) comporte une denture (14) et ladite périphérie externe (6A) de l'écrou (6) est du type à six pans.

4. Dispositif de liaison selon l'une quelconque des revendications précédentes, **caractérisé en ce que** ladite vis (20) s'étend dans un plan sensiblement perpendiculaire audit axe (X-X) longitudinal.

5. Dispositif de liaison selon l'une quelconque des revendications précédentes, **caractérisé en ce que** ladite vis (20) est vissée dans un écrou de serrage (21) qui comprend au moins un évidement transversal (21A) destiné à être aligné avec un orifice transversal (20A) de ladite vis (20) pour le passage d'un élément d'immobilisation (22) tel qu'une goupille ou un fil frein.

6. Ensemble mécanique pour un aéronef comportant des pièces mécaniques liées ensemble par un dispositif (1) de liaison selon l'une quelconque des revendications 1 à 5.

7. Procédé d'assemblage de deux pièces mécaniques, à l'aide d'un dispositif (1) de liaison tel que celui spécifié selon l'une quelconque des revendications 1 à 5, **caractérisé en ce qu'**il comprend des étapes (E1, E2, E3, E4, E5, E6) consistant successivement au moins :
- à insérer ladite tige (4) dans lesdites chapes (2, 3) alignées desdites deux pièces mécaniques (P1, P2) jusqu'à ce que ladite butée (4B) axiale soit en appui contre une desdites deux pièces mécaniques (P1, P2) ;
- à monter ladite rondelle (8) autour de ladite tige (4) contre l'autre desdites deux pièces mécaniques (P1, P2) ;
- à visser l'écrou (6) sur la partie filetée (4C) de ladite tige (4) jusqu'à une position de contact avec ladite rondelle (8) ;
- à monter la bague (13) autour de l'écrou (6) ;
- à amener, par dévissage, ledit écrou (6) de ladite position de contact jusqu'à une position d'arrêt ;
- à intercaler l'excroissance (11) de la rondelle entre les pattes (18A, 18b) de la bague (13), et
- à bloquer en rotation ledit écrou (6) dans ladite position d'arrêt par ladite vis (20), cette vis traversant des orifices (12, 19A, 19B) des pattes (18A, 18B) et de l'excroissance (11) et étant vissée dans un écrou de serrage (21).

## Patentansprüche

1. Verbindungsvorrichtung, die dazu bestimmt ist, zwei verschiedene mechanische Teile (P1, P2) miteinander zu verbinden, wobei die Vorrichtung (1) beinhaltet:
- eine Stange (4), die eine Längsachse (X-X) aufweist und ein Teilstück (4A) umfasst, das dazu bestimmt ist, mindestens teilweise in ausgerichtete Gabelböcke (2, 3) der mechanischen Teile (P1, P2) eingeführt zu werden, wobei sich das Teilstück (4A) zwischen einem axialen Anschlag (4B) und einem Gewindeteil (4C) der Stange erstreckt,
- eine Mutter (6), die konfiguriert ist, um auf den Gewindeteil (4C) der Stange (4) geschraubt zu werden, um die beiden mechanischen Teile (P1, P2) zwischen dem axialen Anschlag (4B) und der Mutter (6) zu halten, und
- ein Verdrehsicherungssystem (7), das konfiguriert ist, um die Drehung der Mutter (6) zu blockieren, wobei das Verdrehsicherungssystem (7) beinhaltet:
- eine Scheibe (8), die um die Stange (4) herum montiert ist, und konfiguriert ist, um durch Formschluss mit der Stange (4) zusammenzuwirken, sodass die Scheibe (8) drehfest mit der Stange (4) verbunden ist, wobei die Scheibe (8) mindestens einen Vorsprung (9) umfasst, der sich in Bezug auf die Längsachse (X-X) nach innen erstreckt, wobei der oder jeder Vorsprung (9) in eine Einkerbung (10) in ergänzender Form zur Stange (4) eingebracht ist, und
- einen Ring (13), der um die Mutter (6) herum montiert ist, wobei der Ring (13) eine innere Peripherie (13A) in ergänzender Form zu jener einer äußeren Peripherie (6A) der Mutter (6) beinhaltet, sodass der Ring (13) drehfest mit der Mutter (6) verbunden ist,
**dadurch gekennzeichnet, dass** das Verdrehsicherungssystem (7) auch eine Schraube (20) beinhaltet, die konfiguriert ist, um für eine feste axiale Drehverbindung des Ringes (13) und der Scheibe (8) zu sorgen,
und dadurch, dass der Ring (13) auch beinhaltet:
- einen axialen Schlitz (16), um das Montagespiel auf der Mutter (6) zu minimieren,
- zwei Umfangsenden (17A, 17B), die sich beiderseits des axialen Schlitzes (16) befinden, wobei sich jedes der Umfangsenden (17A, 17B) in einer Befestigungslasche (18A, 18B) fortsetzt, die eine mittlere Öffnung (19A, 19B) zum Durchführen der Schraube (20) beinhaltet, wobei die Scheibe (8) eine Ausstülpung (11) beinhaltet, die konfiguriert ist, um zwischen die Laschen (18A, 18B) eingeschoben zu werden, wobei die Ausstülpung (11) eine Öffnung (12) zum Durchführen der Schraube (20) beinhaltet.

2. Verbindungsvorrichtung nach Anspruch 1, **dadurch gekennzeichnet, dass** die Scheibe (8) eine Anzahl an Vorsprüngen (9) umfasst, die zwischen zwei und vier liegt, wobei die Vorsprünge (9) regelmäßig um die Längsachse (X-X) herum angeordnet sind.

3. Verbindungsvorrichtung nach einem der vorstehenden Ansprüche, **dadurch gekennzeichnet, dass** die innere Peripherie (13A) des Ringes (13) eine Verzahnung (14) beinhaltet und die äußere Peripherie (6A) der Mutter (6) vom Typ eines Sechskants ist.

4. Verbindungsvorrichtung nach einem der vorstehenden Ansprüche, **dadurch gekennzeichnet, dass** sich die Schraube (20) in einer Ebene im Wesentlichen senkrecht zur Längsachse (X-X) erstreckt.

5. Verbindungsvorrichtung nach einem der vorstehenden Ansprüche, **dadurch gekennzeichnet**, das die Schraube (20) in eine Klemmmutter (21) geschraubt wird, die mindestens eine Querausnehmung (21A) umfasst, die dazu bestimmt ist, mit einer Queröffnung (20A) der Schraube (20) zum Durchführen eines Immobilisierungselements (22), wie eines Splints oder eines Schraubensicherungsdrahtes ausgerichtet zu sein.

6. Mechanische Baugruppe für ein Luftfahrzeug, die mechanische Teile beinhaltet, die durch eine Verbindungsvorrichtung (1) nach einem der Ansprüche 1 bis 5 miteinander verbunden sind.

7. Verfahren zum Zusammensetzen zweier mechanischer Teile, mithilfe einer Verbindungsvorrichtung (1) in der Art von jener nach einem der Ansprüche 1 bis 5, **dadurch gekennzeichnet, dass** es Schritte (E1, E2, E3, E4, E5, E6) umfasst, die nacheinander darin bestehen:
- die Stange (4) in die ausgerichteten Gabelböcke (2, 3) der beiden mechanischen Teile (P1, P2) einzuführen, bis der axiale Anschlag (4B) an einem der mechanischen Teile (P1, P2) anliegt;
- die Scheibe (8) um die Stange (4) herum an dem anderen der beiden mechanischen Teile (P1, P2) zu montieren;
- die Mutter (6) auf dem Gewindeteil (4C) der Stange (4) bis zu einer Kontaktposition mit der Scheibe (8) zu schrauben;
- den Ring (13) um die Mutter (6) herum zu montieren;
- die Mutter (6) durch Losschrauben von der Kontaktposition bis zu einer Stoppposition zu führen;
- die Ausstülpung (11) der Scheibe zwischen die Laschen (18A, 18b) des Ringes (13) einzuschieben, und
- die Drehung der Mutter (6) in der Stopposition durch die Schraube (20) zu blockieren, wobei diese Schraube Öffnungen (12,19A, 19B) der Laschen (18A, 18B) und der Ausstülpung (11) durchquert und in eine Klemmmutter (21) geschraubt wird.

## Claims

1. A connecting device for connecting together two separate mechanical parts (P1, P2), said device (1) comprising:
- a rod (4) having a longitudinal axis (X-X) and comprising a section (4A) intended to be inserted at least partly into aligned clevises (2, 3) of said mechanical parts (P1, P2), said section (4A) extending between an axial stop (4B) and a threaded portion (4C) of the rod,
- a nut (6) configured to be screwed onto said threaded portion (4C) of said rod (4) so as to hold said two mechanical parts (P1, P2) between said axial stop (4B) and said nut (6), and
- an anti-rotation system (7) configured to block in rotation said nut (6), said anti-rotation system (7) comprising:
∘ a washer (8) mounted around said rod (4) and configured to cooperate by complementary shapes with said rod (4) so that said washer (8) is secured in rotation to said rod (4), said washer (8) comprising at least one protuberance (9) extending inwards with respect to said longitudinal axis (X-X), the or each protuberance (9) being engaged in a notch (10) of complementary shape in said rod (4), and
∘ a ring (13) mounted around the nut (6), said ring (13) comprising an internal periphery (13A) complementary in shape to that of an external periphery (6A) of said nut (6) so that said ring (13) is secured in rotation to said nut (6),
**characterised in that** said anti-rotation system (7) also comprises a screw (20) which is configured to ensure that said ring (13) and said washer (8) are secured axially in rotation,
and **in that** said ring (13) also comprises:
- an axial slot (16) to minimise the mounting clearance on said nut (6),
- two circumferential ends (17A, 17B) which are located on either side of said axial slot (16), each of said circumferential ends (17A, 17B) extending into an attachment tab (18A, 18B) comprising a central orifice (19A, 19B) for the passage of said screw (20), said washer (8) comprising a protrusion (11) configured to be interposed between said tabs (18A, 18B), said protrusion (11) comprising an orifice (12) for the passage of said screw (20).

2. The connecting device according to claim 1, **characterised in that** said washer (8) comprises a number of protuberances (9) of between two and four, said protuberances (9) being arranged in a regular manner around said longitudinal axis (X-X).

3. The connecting device according to any one of the preceding claims, **characterised in that** said internal periphery (13A) of the ring (13) comprises a toothing (14) and said external periphery (6A) of the nut (6) is of the hexagonal type.

4. The connecting device according to any one of the preceding claims, **characterised in that** said screw (20) extends in a plane substantially perpendicular to said longitudinal axis (X-X).

5. The connecting device according to any one of the preceding claims, **characterised in that** said screw (20) is screwed into a tightening nut (21) which comprises at least one transverse recess (21A) intended to be aligned with a transverse orifice (20A) of said screw (20) for the passage of an immobilising element (22) such as a pin or a brake wire.

6. A mechanical assembly for an aircraft comprising mechanical parts connected together by a connecting device (1) according to any one of claims 1 to 5.

7. A method for assembling two mechanical parts, using a connecting device (1) such as that specified according to any one of claims 1 to 5, **characterised in that** it comprises steps (E1, E2, E3, E4, E5, E6) consisting successively of at least:
- inserting said rod (4) into said aligned clevises (2, 3) of said two mechanical parts (P1, P2) until said axial stop (4B) bears against one of said two mechanical parts (P1, P2);
- mounting said washer (8) around said rod (4) against the other of said two mechanical parts (P1, P2);
- screwing the nut (6) onto the threaded portion (4C) of said rod (4) until it is in a position of contact with said washer (8);
- mounting the ring (13) around the nut (6);
- unscrewing said nut (6) from said contact position to a stop position;
- interposing the protrusion (11) of the washer between the tabs (18A, 18b) of the ring (13), and
- blocking said nut (6) in rotation in said stop position by said screw (20), this screw passing through orifices (12, 19A, 19B) of the tabs (18A, 18B) and of the protrusion (11) and being screwed into a tightening nut (21).
